# EUROPEAN PATENT APPLICATION

(11) **EP 4 696 133 A1**
(43) Date of publication of application: **18.02.2026**
(21) Application number: 25195774.2
(22) Date of filing: 13.08.2025
(51) Int. Cl.: A01K 87/08, A01K 97/10

(54) **SUPPORT SECURING DEVICE FOR A FISHING ROD**

(30) Priority: 14.08.2024 GB 202411998
(71) Applicant: Catchum 88 Limited, Hockley SS5 5LR (GB)
(72) Inventor: SMART, Laurence, DOWNHAM MARKET, PE38 9LP (GB)
(74) Representative: Dummett Copp LLP

(57) **Abstract**

A fishing rod accessory kit comprises an end cap for attachment to a fishing rod and a support. The end cap comprises an insertion portion for engagement with a proximal end of a handle of a fishing rod such that a longitudinal axis of the insertion portion is parallel to a longitudinal axis of the fishing rod and an attachment portion including a first locking element. The support comprises a shaft and a receiving portion secured to the shaft, the receiving portion including a second locking element. The attachment portion extends in a longitudinal direction from the insertion portion such that, in use, the first locking element is spaced longitudinally from said proximal end of the handle of the fishing rod. The attachment portion is engageable with the receiving portion by rotation of the attachment portion with respect to the receiving portion about the longitudinal axis of the insertion portion such that the first locking element engages with the second locking element.

## Description

### FIELD OF THE INVENTION

The present invention relates to the field of fishing rod rests or fishing rod holders. In particular this invention relates to the field of holders for supporting a rear or proximal end of a fishing rod when the fishing rod is to be supported on the ground.

### BACKGROUND TO THE INVENTION

All fishing rods are essentially elongate tubes, extending from a handle at a first, proximal end to a tip at a second, distal end. To close the tube at the proximal end most fishing rods are fitted with an end cap or 'butt-cap', which is engaged with the base or end of the handle. The butt-cap provides a number of functions, including protecting the tube from damage and ingress of water, dirt and/or grit, finishing the rod aesthetically, and sometimes providing a slightly resilient end to the rod for placement against the angler's body.

Whilst fishing it is common for an angler to support their rod on the ground rather than holding the rod continuously. It will be appreciated that the rod should be supported so that it does not move. This prevents the rod being pulled towards the water when a fish gets caught on the end of the fishing line. With a fish attached to the fishing line, the angler can then take hold of the fishing rod again to reel the fish towards the shore or bank.

A fishing rod is generally supported on a fishing rod rest that is mounted in or on the ground. The rod is engaged with rod rest at a point between the reel and the tip of the fishing rod so that the tip of the rod is raised off the ground. Known rod rests have a number of different designs and they may allow the fishing rod to be mounted so that the rod is held off the ground parallel to the ground or at an angle to the ground. A bite alarm is often positioned near the rod rest to detect a fish pulling on the fishing line.

In some instances, anglers may be required to, or may choose to, place the handle or proximal end of the rod on the ground so that the rod is simply leaning against the rod rest. With the fishing rod angled in this way the proximal end of the rod cannot easily be secured. Accordingly, many anglers opt to either fish with an unsecured rod or they use a tent peg or bivvy peg to pin the proximal end of the rod in position.

When a tent peg or bivvy peg is used, a hook part of the peg is positioned over a part of the handle of the fishing rod and the peg is pushed into the ground so that the handle is clamped between the peg and ground.

It will be appreciated that the use of a tent peg or the like is not ideal as it is easy to damage the handle of the fishing rod. Furthermore, when the angler detects a bite on the fishing line, it is difficult to remove the tent peg or similar quickly as it is securely fastened into the ground and over a part of the handle of the fishing rod. This delays the angler being able to pick up the fishing rod and reel the fish in.

It is an aim of the present invention to provide an improved securing device for an end of a fishing rod that overcomes a disadvantage of prior art securing devices whether referred to herein or otherwise.

### SUMMARY OF THE INVENTION

A first aspect of the present invention provides a fishing rod accessory kit comprising:
an end cap for attachment to a fishing rod, the end cap comprising an insertion portion for engagement with a proximal end of a handle of a fishing rod such that a longitudinal axis of the insertion portion is parallel to a longitudinal axis of the fishing rod and an attachment portion including a first locking element; and
a support comprising a shaft and a receiving portion secured to the shaft, the receiving portion including a second locking element,
wherein, the attachment portion extends in a longitudinal direction from the insertion portion such that, in use, the first locking element is spaced longitudinally from said proximal end of the handle of the fishing rod, and
wherein, the attachment portion is engageable with the receiving portion by rotation of the attachment portion with respect to the receiving portion about the longitudinal axis of the insertion portion such that the first locking element engages with the second locking element.

Preferably the insertion portion is a plug configured to be inserted into a bore of said handle of the fishing rod. In other embodiments the insertion portion may be in the form of a sleeve that fits over and around an outer surface of the proximal end of the handle of the fishing rod. The insertion portion preferably comprises a contact surface that is configured to abut a proximal end surface or edge of said handle of the fishing rod.

The attachment portion is preferably removably secured to the insertion portion. In some embodiments the attachment portion is removably secured to the insertion portion by a mechanical fastener.

In some embodiments in which the attachment portion is removably secured to the insertion portion, the insertion portion may comprise a recess and the attachment portion may comprise a stem, the stem and the recess having complementary shapes and dimensions such that the stem is able to be seated in the recess when the attachment portion is secured to the insertion portion. Preferably the shapes of the recess and stem are such that attachment portion is unable to rotate with respect to the insertion portion about the longitudinal axis. In some embodiments the fishing rod accessory kit may further comprise a blanking plate, the blanking plate being configured to be seated in the recess after removal of the attachment portion. A thickness of the blanking plate is preferably equal to a depth of the recess such that a surface of the blanking plate is continuous with an end face of the insertion portion when the blanking plate is seated in the recess.

In preferred embodiments the first locking element engages with the second locking element after rotation of the attachment portion with respect to the receiving portion through an angle of between 45° and 120°.

In some embodiments the first locking element is a male locking element and the second locking element is a female locking element. The male locking element is preferably engageable with the female locking element by insertion into an aperture of the female locking element in a first orientation and subsequent rotation of the male locking element with respect to the female locking element into a second orientation. Preferably the male locking element comprises a lug and the female locking element comprises a recess sized to receive the lug. The recess is preferably in a side wall of the aperture and preferably extends laterally from the aperture.

In preferred embodiments the shaft of the support is elongate and includes a tip configured to be inserted into an area of ground.

The receiving portion of the support preferably comprises an aperture for receiving the first locking element. An insertion axis of the aperture is preferably transverse to an axis of the shaft.

A second aspect of the present invention provides an assembly comprising:
a fishing rod having a longitudinal axis extending from a handle to a tip of the fishing rod, the handle having a proximal end;
an end cap comprising an insertion portion and an attachment portion, the insertion portion being secured to the proximal end of the handle, and the attachment portion including a first locking element; and
a support comprising a shaft and a receiving portion secured to the shaft, the receiving portion including a second locking element,
wherein, the attachment portion extends in a longitudinal direction from the insertion portion such that the first locking element is spaced longitudinally from the proximal end of the handle of the fishing rod,
wherein, the first locking element is releasably engaged with the second locking element such that movement of the end cap with respect to the support in both a first direction parallel to the longitudinal axis of the fishing rod and a second direction perpendicular to the longitudinal axis of the fishing rod is restricted, and
wherein the first locking element is releasable from the second locking element by rotation of the end cap about the longitudinal axis.

In preferred embodiments the insertion portion of the end cap is permanently secured to the handle of the fishing rod. In other embodiments the insertion portion of the end cap may be removable from and securable to the handle of the fishing rod.

The insertion portion of the end cap preferably comprises a plug that extends into a bore of the handle of the fishing rod. In other embodiments the insertion portion may be in the form of a sleeve that fits over and around an outer surface of the proximal end of the handle of the fishing rod.

In preferred embodiments the first locking element is releasable from the second locking element by rotation of the end cap about the longitudinal axis through an angle of between 45° and 120°.

The first locking element preferably comprises a pair of lugs, and the second locking element preferably comprises an aperture and a pair of recesses provided in a side wall of the aperture and extending laterally from the aperture, each recess configured to receive a respective one of the lugs.

The shaft of the support may be mounted in an area of ground.

A third aspect of the present invention provides a method of securing a fishing rod to an object, the fishing rod having a longitudinal axis extending between a handle and a tip of the fishing rod, and the method comprising:
providing an end cap at a proximal end of the handle, the end cap including an attachment portion extending longitudinally from the proximal end of the handle, and the attachment portion including a first locking element spaced longitudinally from the proximal end of the handle;
providing a support having a shaft mounted in or on the object;
engaging the attachment portion of the end cap with a receiving portion of the support with the end cap in a first orientation with respect to the support;
subsequently, rotating the end cap with respect to the support about the longitudinal axis of the fishing rod into a second orientation to releasably engage the first locking element with a second locking element provided by the receiving portion of the support.

The end cap is preferably rotated through an angle of between 45° and 120° from the first orientation to the second orientation.

In preferred embodiments the object is the ground and the method comprises inserting the shaft of the support at least partially into the ground.

The first locking element preferably comprises a pair of lugs and the second locking element preferably comprises a corresponding pair of recesses. In these embodiments the step of engaging the attachment portion of the end cap with a receiving portion of the support preferably comprises inserting a part of the attachment portion into an aperture of the receiving portion. The step of releasably engaging the first locking element with the second locking element preferably comprises rotating the end cap with respect to the support about the longitudinal axis of the fishing rod so that the pair of lugs engage in the corresponding pair of recesses, the recesses being provided in a side wall of the aperture of the receiving portion and extending laterally from the aperture.

Preferred and/or optional features of each aspect and embodiment described above may also be used, alone or in appropriate combination, in the other aspects and embodiments also.

### BRIEF DESCRIPTION OF THE DRAWINGS

The invention will now be further described by way of example only and with reference to the accompanying drawings, in which like reference signs are used for like features, and in which:
Figure 1 illustrates a fishing rod including a handle or butt at a proximal end of the rod, a reel, a tip at a distal end of the rod, and a plurality of guides along the length of the rod for guiding a fishing line;
Figure 2 is an exploded view showing elements of an end cap for a fishing rod according to a preferred embodiment of the present invention;
Figure 3 is a perspective view of the end cap for a fishing rod of Figure 2 in its assembled form;
Figure 4 is a perspective view of a ground support for engagement with the end cap of Figure 3 according to a preferred embodiment of the present invention;
Figure 5 is a perspective view of an embodiment of a blanking end cap according to the invention; and
Figure 6 is an exploded view showing the elements of the blanking end cap of Figure 5.

### DESCRIPTION OF THE PREFERRED EMBODIMENTS

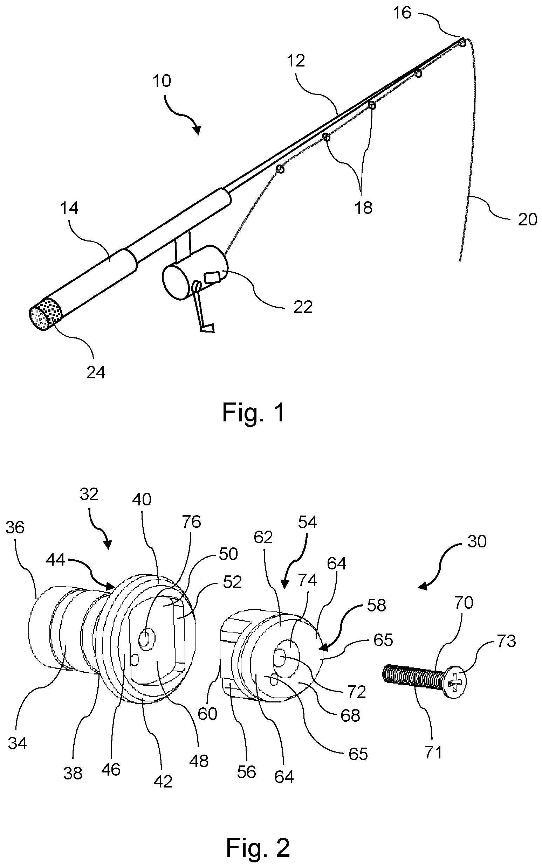

Although fishing rods may vary in their length and design, nearly all fishing rods have a number of components in common. Referring to Figure 1, a fishing rod 10 comprises an elongate rod 12 extending between a first end and a second end. A handle or butt 14 is connected to the first end of the rod 12 and the second end of the rod 12 forms the tip 16 of the fishing rod 10. An end of the handle 14 forms a proximal end of the fishing rod 10. A longitudinal axis of the fishing rod extends between the proximal end of the handle 14 and the tip 16 of the rod 12.

A plurality of guides 18 are disposed along the length of the rod 12 between the handle 14 and the tip 16. The guides 18 support and guide a length of fishing line 20. The fishing line 20 is attached to a reel 22 which is in turn attached to a part of the handle or butt 14 at a distance from the proximal end of the fishing rod 10.

In this example the handle 14 is tubular and has a bore extending along the axis of the handle 14. An end cap or butt-cap 24 is attached to the end of the handle 14 at the proximal end of the fishing rod 10. In this example the butt-cap 24 is made of a resilient material, such as cork or rubber. In other examples the butt-cap may be made of other materials, such as an aluminium alloy or plastic.

The butt-cap 24 protects the proximal end of the fishing rod 10, and in particular blocks the end of the tube forming the handle 14. The butt-cap may also help to correctly balance the fishing rod for optimum performance, and may provide a comfortable end to the handle 14 if an angler chooses to lean or press the end of the fishing rod against his body when fishing.

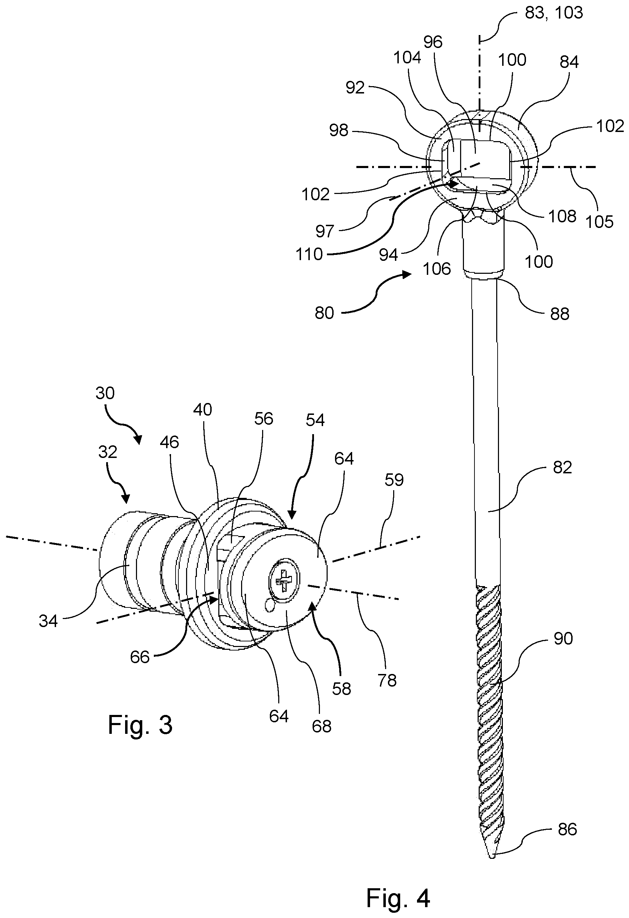

Referring now to Figures 2 and 3, an end cap 30 for a fishing rod 10 according to a preferred embodiment of the present invention is shown. The end cap 30 includes an insertion portion 32 for engagement with the proximal end of the handle 14 of the fishing rod 10. In this embodiment the insertion portion 32 comprises a stopper or plug 34 that is configured to be inserted into the end of the bore of the tube forming the handle 14 of the fishing rod 10. In this embodiment the plug 34 is generally cylindrical and extends between a first end 36 and a second end 38. A longitudinal axis of the insertion portion 32 extends between the first and second ends 36, 38 of the plug 34.

The insertion portion 32 further comprises an abutment plate 40 disposed at the second end 38 of the plug 34. An outer diameter of the abutment plate 40 is greater than an outer diameter of the plug 34 such that a rim 42 of the abutment plate 40 extends radially outwards from the second end 38 of the plug 34. A contact surface 44 of the insertion portion 32 is provided by a surface of the rim 42. The contact surface 44 faces generally in a direction towards the first end 36 of the plug 34. The abutment plate 40 includes an end face 46 that faces in an opposite direction to the contact surface 44 and in a direction generally away from the plug 34. In this embodiment the end face 46 includes a recess 48. The recess 48 is preferably disposed centrally in the end face 46.

The recess 48 comprises a base 50 and a side wall 52. The side wall 52 includes two opposing lateral portions and two opposing end portions. In this embodiment the recess 48 is generally rectangular, rounded rectangular or stadium-shaped. Preferably, the lateral portions are generally planar, and the end portions are curved or partially curved.

The recess 48 provides a socket of the end cap 30 for receiving an attachment portion 54 of the end cap 30. In this embodiment the attachment portion 54 comprises a stem 56 and a male locking element 58. The stem 56 extends between a first end 60 and a second end 62. A longitudinal axis of the attachment portion 54 extends between the first and second ends 60, 62. The male locking element 58 is disposed at the second end 62 of the stem 56.

The outer perimeter shape of the stem 56, transverse to the longitudinal axis, is complementary to the shape of the recess of the insertion portion 32. In this embodiment, therefore, the outer perimeter shape is generally rectangular, rounded rectangular or stadium shaped. The stem 56 includes a pair of opposing, generally planar side walls and a pair of opposing, curved end walls. Additionally, the dimensions of the stem 56 are such that the first end 60 is engageable in the recess 48 so that the side walls of the stem 56 are disposed adjacent the lateral portions of the side wall 52 of the recess 48 and the end walls of the stem 56 are disposed adjacent the end portions of the side wall 52 of the recess 48.

A length of the stem 56 in the longitudinal direction is greater than a depth of the recess 48. Accordingly, when the first end 60 of the stem 56 is seated in the recess 48, the second end 62 of the stem 56 protrudes from the recess 48 in a longitudinal direction.

In this embodiment the male locking element 58 comprises a pair of lugs 64 that extend from the second end 62 of the stem 56. Each lug 64 extends from the stem 56 in a direction transverse to the longitudinal axis. Furthermore, the lugs 64 extend in opposite directions to each other. In this embodiment each of the lugs 64 extends from a respective one of the side walls of the stem 56. The directions of extension of the lugs 64 from the stem 56 defines a locking axis 59 of the end cap 30.

Each of the lugs 64 has a first engagement surface that faces in a direction towards the first end 60 of the stem 56, and an opposite second engagement surface 65. A distance between the first and second engagement surfaces 65 defines a depth of the lugs 64. When the stem 56 is seated in the recess 48, as illustrated in Figure 3, the lugs 64 extend over a part of the end face 46 of the abutment plate 40. The length of the stem 56 means that the lugs 64 are spaced apart from the abutment plate 40 so that a gap 66 is defined between the end face 46 of the abutment plate 40 and the first engagement surface of each of the lugs 64.

In this embodiment each of the second engagement surfaces 65 of the lugs 64 is continuous with an end face of the stem 56 to form an end face 68 of the attachment portion 54. Each of the lugs 64 has a curved outer edge so that a perimeter edge of the end face 68 of the attachment portion 54 is oval or elliptical. The end face 68 therefore has a major axis, or longer dimension, corresponding to the locking axis 59 and a minor axis, or shorter dimension, transverse or perpendicular to the locking axis 59.

In preferred embodiments the attachment portion 54 is removably attached to the insertion portion 32. The end cap 30 therefore preferably comprises a fastener for securing the attachment portion 54 to the insertion portion 32. In this embodiment the fastener is a mechanical fastener in the form of a bolt 70. The bolt 70 is configured to extend through the attachment portion 54 and into the insertion portion 32 so secure the attachment portion 54 to the insertion portion 32.

As illustrated in Figure 2, the attachment portion 54 includes a hole 72 for receiving the bolt 70 that extends longitudinally through the stem 56 between the first and second ends 60, 62. The hole 72 may or may not be threaded. If the hole 72 is not threaded, then a diameter of the hole 72 is such that there is clearance for a shaft 71 of the bolt 70 to extend through the hole 72. Preferably the hole 72 includes a countersunk region 74 at the second end 62 of the stem 56 for receiving a head 73 of the bolt 70. A hole 76 is also provided in the abutment plate 40 of the insertion portion 32. The hole 76 extends longitudinally from the base 50 of the recess 48. The hole 76 is preferably threaded.

When the stem 56 is seated in the recess 48 the hole 72 in the attachment portion 54 is aligned with the hole 76 in the abutment plate 40. The bolt 70 may then be inserted through the hole 72 in the attachment portion 54 and engaged with the hole 76 in the abutment plate 40. The bolt 70 is preferably tightened so that the attachment portion 54 is clamped between the head of the bolt 70 and the abutment plate 40.

When the attachment portion 54 is attached to the insertion portion 32, the longitudinal axis of the attachment portion 54 is aligned with the longitudinal axis of the insertion portion 32 to form a longitudinal axis 78 of the end cap 30.

The end cap 30 is configured to engage with a ground support 80 so that, with the end cap 30 attached to a proximal end of a fishing rod 10 and with the ground support 80 disposed in the ground, the proximal end of the fishing rod 10 may be held securely and in a fixed position relative to the ground.

An embodiment of the ground support 80 is illustrated in Figure 4. The ground support 80 comprises a shaft or peg 82 for insertion into the ground and a receiving portion 84 for engagement with the end cap 30.

The shaft 82 is elongate and extends between a first end or tip 86 and a second end 88. An axis 83 of the shaft is defined by and extends between the first and second ends 86, 88. The tip 86 is preferably pointed or tapered to assist in inserting the ground support 80 into the ground. A first end region 90 of the shaft, adjacent the tip 86, may be threaded. This threaded region 90 may permit the ground support 80 to be twisted or screwed into the ground such that the threaded region 90 helps to anchor the ground support 80 in the ground.

The receiving portion 84 is attached to the second end 88 of the shaft 82. In this way, when the tip 86 of the shaft 82 is inserted into the ground, the receiving portion 84 is supported at a height above the ground by the shaft 82. This height may be varied depending on how far into the ground the shaft 82 is inserted.

The receiving portion 84 comprises a main body 92 having opposite first and second faces 94. An aperture 96 extends through the main body 92 between the first and second faces 94. An axis 97 of the aperture 96, extending between the first and second faces 94, extends transverse to the axis 83 of the shaft 82. The axis 97 of the aperture 96 is preferably perpendicular to the axis 83 of the shaft 82.

A side wall 98 extends around and defines a perimeter of the aperture 96. The side wall 98 includes, in a direction parallel to the axis 97 of the aperture 96, a first region at and adjacent the first face 94 of the main body 92, a third region at and adjacent the second face of the main body 92, and a second region extending between the first and third regions.

Additionally, the side wall 98 has, around its perimeter, opposing first and second portions 100 and opposing third and fourth portions 102. A direction extending between the first and second portions 100 defines a first locking axis 103, which extends parallel to the axis 83 of the shaft 82 and perpendicular to the axis 97 of the aperture 96. A direction extending between the third and fourth portions 102 defines a second locking axis 105, which extends perpendicular to both the axis 83 of the shaft 82 and the axis 97 of the aperture 96.

In this embodiment, in the first region of the side wall 98, the perimeter of the aperture 96 has a generally rectangular or rounded rectangular shape. In this way the aperture 96 at the first face 94 has a major axis, or longer dimension, in a direction parallel to the second locking axis 105, and a minor axis, or shorter dimension, in a direction parallel to the first locking axis 103.

In each of the third and fourth portions 102 of the side wall 98 there is a step between the second and third regions. This results in an area and a perimeter of the aperture 96 in the second face of the main body 92 being smaller than at the first face 94 of the main body 92. A step surface or stop surface 104 is formed in each of the third and fourth portions 102 of the side wall 98, the step surface 104 facing in a direction generally towards the first face 94 of the main body 92.

A recess 106 is provided in each of the first and second portions 100 of the side wall 98. Each recess 106 is disposed in the second region of the side wall 98. Each recess 106 is defined between opposing first and second surfaces 108. The first surface is preferably parallel to the first face 94 of the main body 92, and is spaced from the first face 94 by a part of the main body 92 corresponding to a depth of the first region of the side wall 98. Similarly, the second surface 108 is preferably parallel to the second face of the main body 92, and is spaced from the second face by a part of the main body 92 corresponding to a depth of the third region of the side wall 98. The recesses 106 are configured to receive the lugs 64 of the end cap 30. Accordingly, a distance between the first and second surfaces 108 is preferably substantially the same as or slightly greater than the depth of the lugs 64, i.e. the distance between the first and second engagement surfaces 65. The recesses 106 in the side wall 98 provide a female locking element 110.

In use, the end cap 30 is attached to the handle 14 of the fishing rod 10 (in place of the traditional butt-cap 24). In this embodiment the plug 34 is inserted into the bore of the tubular handle 14 until the contact surface 44 of the abutment plate 40 abuts the proximal end of the handle 14. The longitudinal axis 78 of the end cap 30 is then aligned with the longitudinal axis of the fishing rod 10, and the attachment portion 54 of the end cap 30 protrudes or extends longitudinally from the proximal end of the handle 14 of the fishing rod 10.

The ground support 80 is secured in the ground in the desired position by inserting the shaft 82 into the ground. The attachment portion 54 of the end cap 30 can then be engaged with the receiving portion 84 of the ground support 80 to provide a secure support for the proximal end of the fishing rod 10.

The attachment portion 54 of the end cap 30 is inserted through the aperture 96 in the first face 94 of the main body 92. The shape and dimensions of the aperture 96 in the first face 94 and the shape and dimensions of the lugs 64 are such that the attachment portion 54 of the end cap 30 can only be inserted into the aperture in one of two orientations. In this example the longer dimension of the end face 68 of the attachment portion 54 is greater than the shorter dimension of the aperture 96 at the first face 94 of the receiving portion 84, such that the male locking element 58 (i.e. the lugs 64) can only be inserted through the aperture 96 in the first face 94 when the locking axis 59 of the end cap 30 is aligned with the second locking axis 105 of the ground support 80.

The attachment portion 54 of the end cap 30 is preferably inserted through the aperture 96 until the end face 68 of the attachment portion 54 contacts the stop surface 104 of the receiving portion 84 of the ground support 80. In this position the lugs 64 are preferably aligned with the second region of the side wall 98.

To engage the male locking element 58 of the end cap 30 with the female locking element 110 of the ground support 80, the end cap 30 is then rotated through 90°. This causes the lugs 64 to engage in the recesses 106. A part of the main body 92 between the first surface of each recess 106 and the first face 94 of the main body 92 is disposed in the gap 66 between the end face 46 of the abutment plate 40 and the respective first engagement surface of each of the lugs 64. In this position the locking axis 59 of the end cap 30 is aligned with the first locking axis 103 of the ground support 80.

Preferably a depth of the gap 66, i.e. a distance between the end face 46 of the abutment plate 40 and the first engagement surface of the lug 64, is substantially equal to or slightly greater than a depth of the part of the main body 92 between the first surface of the recess 106 and the first face 94 of the main body 92. Accordingly, with the lugs 64 disposed in the recesses 106, the first engagement surface of each lug 64 is disposed adjacent to and preferably in contact with the first surface of the respective recess 106, and at least a part of the end face 46 of the abutment plate 40 is disposed adjacent to and preferably in contact with the first face 94 of the main body 92.

In this locked position, therefore, the end cap 30, and therefore the proximal end of the fishing rod 10, is held against movement relative to the ground support 80 in a direction parallel to the longitudinal axis of the fishing rod 10.

Furthermore, the shape and dimensions of the stem 56 transverse to the longitudinal axis 78 of the end cap 30, and the shape and dimensions of the aperture 96 in the first face 94 of the main body 92, are such that, in the locked position the end cap 30 is also held against movement relative to the ground support 80 in directions perpendicular to the longitudinal axis of the fishing rod 10.

It will be appreciated that, with the end cap 30 securely attached to the handle 14 of the fishing rod 10, the male locking element 58 may be engaged with the female locking element 110 simply by twisting the handle 14 of the fishing rod 10 through 90° as the attachment portion 54 of the end cap 30 is inserted into the aperture 96 in the ground support 80.

Similarly, to disengage the end cap 30 from the ground support 80 the handle 14 of the fishing rod 10 is rotated back through 90°, in the opposite direction, so that the lugs 64 disengage from the recesses 106.

Little movement of the fishing rod 10 in a direction parallel to the longitudinal axis of the fishing rod 10 is required to engage and disengage the end cap 30 from the ground support 80 because the male locking element 58 is disposed at the end of the end cap 30 furthest from the handle 14 of the fishing rod 10. The distance that the fishing rod 10 needs to be moved parallel to the longitudinal axis of the fishing rod 10 to engage and disengage the end cap 30 from the ground support 80 is only equal to the depth of the part of the main body 92 between the first surface of the recess 106 and the first face 94 of the main body 92.

This means that an angler may engage the fishing rod 10 with, and more importantly disengage the fishing rod 10 from, the ground support 80 with minimal longitudinal movement of the fishing rod 10 and a simple rotation of the fishing rod handle through 90°. This means that the angler may disengage the fishing rod 10 from the ground support 80 quickly and easily without needing to apply a large force to the fishing rod 10 and without needing the move the fishing rod 10 through a significant distance. This is advantageous when the angler is disengaging the fishing rod 10 with a fish caught at the end of the fishing line 20.

In the illustrated embodiment of the end cap 30 the attachment portion 54 is seated in the recess 48 of the insertion portion 32 and is removably secured to the insertion portion 32. This has the advantage that the attachment portion 54 may be removed and replaced by a blanking plate 112 when an angler wishes to have a more traditionally shaped end cap at the proximal end of the handle 14 of the fishing rod 10.

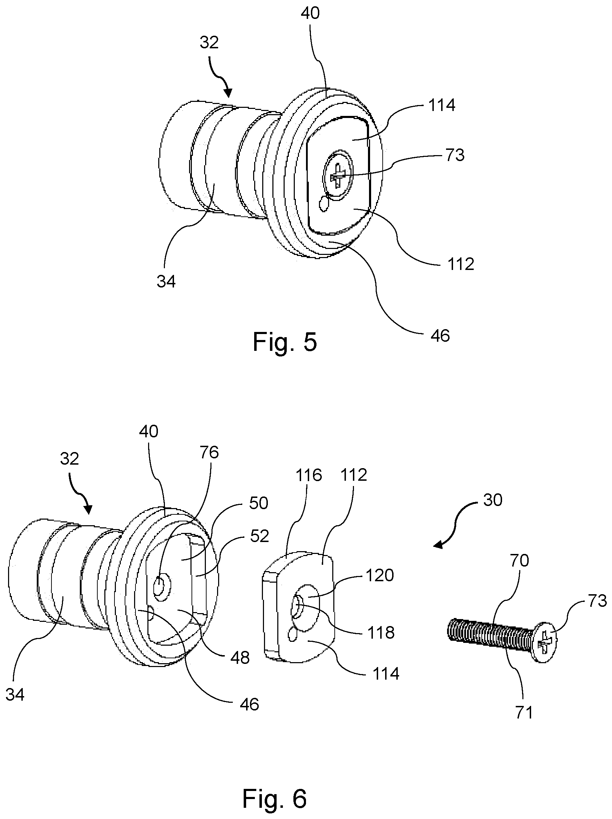

Figures 5 and 6 illustrate the end cap 30 with the blanking plate 112 configured to be seated in the recess 48 of the insertion portion 32. The blanking plate 112 is preferably planar and has opposite first and second faces 114. A thickness of the blanking plate 112 is defined as the distance between the first and second faces 114. The thickness of the blanking plate 112 is preferably equal to the depth of the recess 48. The shape and dimensions of a perimeter edge 116 of the blanking plate 112 are preferably identical to the shape and dimensions of the side wall 52 of the recess 48 so that the blanking plate 112 has a complementary shape to that of the recess 48 and fits perfectly in the recess 48.

The blanking plate 112 is preferably insertable in the recess 48 so that the first face of the blanking plate 112 contacts the base 50 of the recess 48. With the blanking plate 112 seated in the recess 48 the second face 114 of the blanking plate 112 is preferably continuous with the end face 46 of the abutment plate 40.

To provide a blanking plate 112 that is interchangeable with the attachment portion 54, the blanking plate 112 preferably includes a hole 118 that extends through the blanking plate 112 between the first and second faces 114 for receiving the bolt 70. Preferably the hole 118 includes a countersunk region 120 in the second face 114 of the blanking plate 112 for receiving the head 73 of the bolt 70. In this way, the same bolt 70 may be used to attach either the attachment portion 54 or the blanking plate 112 to the insertion portion 32.

It will be understood that in other embodiments of the end cap and the ground support a number of specific features of the end cap and the ground support may be varied whilst still retaining the functions described above.

For example, although in the above embodiment the recess 48 has a generally rectangular shape, in other embodiments the recess may have any suitable shape such that when the complementary stem 56 of the attachment portion 54 is located in the recess the stem cannot rotate within the recess. The recess and the stem preferably, therefore, have complementary anti-rotational shapes, for example, any polygonal shape.

The external or outer diameter of the plug 34 is preferably substantially equal to the internal diameter of the tube of the handle of the fishing rod at its proximal end. This means that there may be a friction fit or push fit of the plug into end of the bore of the handle of the fishing rod. To improve the attachment of the end cap to the handle of the fishing rod an outer surface of the plug may include resilient ridges or other protruding features to increase the frictional force between the plug and the bore of the handle.

In other embodiments the plug may be permanently secured in the proximal end of the handle. For example the plug may be bonding to the handle, by an adhesive or by other means. Alternatively the plug may be mechanically interlocked with the handle, for example by crimping or the like.

In the above embodiment the insertion portion of the end cap included a plug for insertion into the bore of the tubular handle. In other embodiments the insertion portion may include a sleeve that fits over and around an outer surface of the proximal end of the handle of the fishing rod. Preferably the sleeve is secured to the handle of the fishing rod so that there is no possible rotation or circumferential movement of the sleeve around the handle. The sleeve may be bonded, adhered, or otherwise fastened to the handle.

It is desirable if the insertion portion of the end cap is secured to the handle of the fishing rod so that there is no or minimal rotation of the end cap with respect to the handle about the longitudinal axis of the fishing rod and end cap. This means that a rotational force applied to the fishing rod by a user, such as an angler, results in a corresponding rotation of the end cap.

In the above embodiment an edge of the lugs is curved such that the lugs have an approximate semi-circular shape. In other embodiments the lugs may have any shape. Importantly the lugs and the recesses in the ground support should have complementary shapes so that the lugs are able to be seated in the recesses.

In other embodiments the male and female locking elements may have a different configuration and may not be in the form of lugs and recesses. The male and female locking elements are configured such that the male locking element engages with the female locking element by rotation of the end cap about its longitudinal axis.

Furthermore, engagement of the male locking element with the female locking element should result in the end cap being held against movement relative to the ground support in a direction parallel to the longitudinal axis of the end cap. Preferably, engagement of the male locking element with the female locking element also results in the end cap being held against movement relative to the ground support in directions perpendicular to the longitudinal axis of the end cap. Preferably, in the locked position, with the male locking element engaged with the female locking element the only movement of the end cap relative to the ground support that is permitted is rotation of the end cap about its longitudinal axis.

The male and female locking elements may be in the form of complementary screw threads. The screw threads may only comprise a single turn, or half a turn, or a quarter of a turn.

In the above embodiment the first locking axis is perpendicular to the second locking axis, such that the end cap has to be rotated through 90° to engage the male locking element with the female locking element. In other embodiments an angle between the first and second locking axes may be any angle between 5° and 120°. The angle between the first and second locking axes may be 45°. In other words, the end cap must be rotated about its axis through between 5° and 120°, and possibly about 45°, to engage the male locking element with the female locking element.

It will be appreciated that although the male locking element has been described as being provided by the end cap and the female locking element as being provided by the ground support, in other embodiments the end cap may include the female locking element and the ground support may include the male locking element. For example, the end cap may include an aperture and recesses, and the ground support may include a stem and lugs.

In some embodiments the attachment portion may be permanently secured to the insertion portion. In these embodiments the end cap may be a unitary element. The end cap may be formed by a single moulding.

In the above embodiment the ground support included a shaft or peg for insertion into the ground. It will be appreciated that, in some circumstances, it may not be possible to push the shaft into the ground. It may be necessary, therefore, to secure the ground support in another manner. Accordingly, in some embodiments the ground support includes a clamp or other securing element attached to the shaft. This clamp or securing element may then be used to secure the ground support to another structure such as a pipe, bar, chair leg, part of a tent frame, or part of a boat, for example.

Other modifications and variations not explicitly disclosed above may also be contemplated without departing from the scope of the invention as defined in the appended claims.

## Claims

1. A fishing rod accessory kit comprising:
an end cap for attachment to a fishing rod, the end cap comprising an insertion portion for engagement with a proximal end of a handle of a fishing rod such that a longitudinal axis of the insertion portion is parallel to a longitudinal axis of the fishing rod and an attachment portion including a first locking element; and
a support comprising a shaft and a receiving portion secured to the shaft, the receiving portion including a second locking element,
wherein, the attachment portion extends in a longitudinal direction from the insertion portion such that, in use, the first locking element is spaced longitudinally from said proximal end of the handle of the fishing rod, and
wherein, the attachment portion is engageable with the receiving portion by rotation of the attachment portion with respect to the receiving portion about the longitudinal axis of the insertion portion such that the first locking element engages with the second locking element.

2. A fishing rod accessory kit according to Claim 1, in which the insertion portion is a plug configured to be inserted into a bore of said handle of the fishing rod.

3. A fishing rod accessory kit according to Claim 1 or Claim 2, in which the attachment portion is removably secured to the insertion portion, and in which the attachment portion is removably secured to the insertion portion by a mechanical fastener, and in which the insertion portion comprises a recess and the attachment portion comprises a stem, the stem and the recess having complementary shapes and dimensions such that the stem is able to be seated in the recess when the attachment portion is secured to the insertion portion, and wherein the shapes of the recess and stem are such that attachment portion is unable to rotate with respect to the insertion portion about the longitudinal axis.

4. A fishing rod accessory kit according to Claim 3, further comprising a blanking plate, the blanking plate configured to be seated in the recess after removal of the attachment portion.

5. A fishing rod accessory kit according to Claim 4, in which a thickness of the blanking plate is equal to a depth of the recess such that a surface of the blanking plate is continuous with an end face of the insertion portion when the blanking plate is seated in the recess.

6. A fishing rod accessory kit according to any preceding claim, in which the first locking element engages with the second locking element after rotation of the attachment portion with respect to the receiving portion through an angle of between 45° and 120°.

7. A fishing rod accessory kit according to any preceding claim, in which the first locking element is a male locking element and the second locking element is a female locking element, and wherein the male locking element is engageable with the female locking element by insertion into an aperture of the female locking element in a first orientation and subsequent rotation of the male locking element with respect to the female locking element into a second orientation.

8. A fishing rod accessory kit according to Claim 7, in which the male locking element comprises a lug and the female locking element comprises a recess sized to receive the lug, the recess being in a side wall of the aperture and extending laterally from the aperture.

9. A fishing rod accessory kit according to any preceding claim, in which the receiving portion of the support comprises an aperture for receiving the first locking element, and an insertion axis of the aperture is transverse to an axis of the shaft.

10. An assembly comprising:
a fishing rod having a longitudinal axis extending from a handle to a tip of the fishing rod, the handle having a proximal end;
an end cap comprising an insertion portion and an attachment portion, the insertion portion being secured to the proximal end of the handle, and the attachment portion including a first locking element; and
a support comprising a shaft and a receiving portion secured to the shaft, the receiving portion including a second locking element,
wherein, the attachment portion extends in a longitudinal direction from the insertion portion such that the first locking element is spaced longitudinally from the proximal end of the handle of the fishing rod,
wherein, the first locking element is releasably engaged with the second locking element such that movement of the end cap with respect to the support in both a first direction parallel to the longitudinal axis of the fishing rod and a second direction perpendicular to the longitudinal axis of the fishing rod is restricted, and
wherein the first locking element is releasable from the second locking element by rotation of the end cap about the longitudinal axis.

11. An assembly according to Claim 10, in which the insertion portion of the end cap is permanently secured to the handle of the fishing rod.

12. An assembly according to Claim 10 or Claim 11, in which the insertion portion of the end cap comprises a plug that extends into a bore of the handle of the fishing rod.

13. An assembly according to any one of Claim 10 to Claim 12, in which the first locking element comprises a pair of lugs, and the second locking element comprises an aperture and a pair of recesses provided in a side wall of the aperture and extending laterally from the aperture, each recess configured to receive a respective one of the lugs.

14. A method of securing a fishing rod to an object, the fishing rod having a longitudinal axis extending between a handle and a tip of the fishing rod, and the method comprising:
providing an end cap at a proximal end of the handle, the end cap including an attachment portion extending longitudinally from the proximal end of the handle, and the attachment portion including a first locking element spaced longitudinally from the proximal end of the handle;
providing a support having a shaft mounted in or on the object;
engaging the attachment portion of the end cap with a receiving portion of the support with the end cap in a first orientation with respect to the support;
subsequently, rotating the end cap with respect to the support about the longitudinal axis of the fishing rod into a second orientation to releasably engage the first locking element with a second locking element provided by the receiving portion of the support.

15. A method according to Claim 14, in which the first locking element comprises a pair of lugs and the second locking element comprises a corresponding pair of recesses, and wherein the step of engaging the attachment portion of the end cap with a receiving portion of the support comprises inserting a part of the attachment portion into an aperture of the receiving portion, and wherein the step of releasably engaging the first locking element with the second locking element comprises rotating the end cap with respect to the support about the longitudinal axis of the fishing rod so that the pair of lugs engage in the corresponding pair of recesses, the recesses being provided in a side wall of the aperture of the receiving portion and extending laterally from the aperture.
